# EUROPÄISCHE PATENTSCHRIFT

(11) **EP 1 883 766 B1**
(45) Veröffentlichungstag und Bekanntmachung des Hinweises auf die Patenterteilung: **02.03.2011**
(21) Anmeldenummer: 06753737.3
(22) Anmeldetag: 19.05.2006
(51) Int. Cl.: F16L 37/46, B67D 7/50

(54) **BETÄTIGUNGSVORRICHTUNG FÜR EINE SCHNELLANSCHLUSSKUPPLUNG**
ACTUATING DEVICE FOR A RAPID COUPLING
DISPOSITIF D'ACTIONNEMENT POUR RACCORD RAPIDE

(30) Priorität: 21.05.2005 DE 202005008155 U
(43) Veröffentlichungstag der Anmeldung: 06.02.2008
(73) Patentinhaber: Weh, Erwin, D-89257 Illertissen (DE); Weh, Wolfgang, D-89257 Illertissen (DE)
(72) Erfinder: Weh, Erwin, D-89257 Illertissen (DE); Weh, Wolfgang, D-89257 Illertissen (DE)
(74) Vertreter: Fiener, Josef
(86) Internationale Anmeldenummer: PCT/EP2006/004757
(87) Internationale Veröffentlichungsnummer: WO 2006/125566

(56) Entgegenhaltungen:
- EP-A- 0 039 977
- DE-C- 819 366
- DE-U1- 20 317 914
- FR-A- 1 055 252
- US-A1- 2002 069 934

## Beschreibung

Die Erfindung betrifft eine Betätigungsvorrichtung für eine Schnellanschlusskupplung zur Übertragung von gasförmigen und/oder flüssigen Fluiden. Eine derartige Betätigungsvorrichtung gemäß dem Oberbegriff des Anspruchs 1 ist dem Anmelder aus dem DE-GM 203 17 914 bekannt.

Bei solchen Anschlusskupplungen soll eine sichere und schnelle Anschließbarkeit zum Übertragen eines Fluids von einer Druckquelle, beispielsweise von einem Gastank einer Tankstelle erreicht werden. Besonders wichtig ist hierbei die einfache, problemlose Bedienbarkeit der Schnellanschlusskupplung, so dass auch bei ungünstigen Bedingungen eine problemlose Handhabung ermöglicht wird.

Eine Schnellanschlusskupplung ist auch in der WO 98/04866 der Anmelder beschrieben, wobei die Schnellanschlusskupplung ein Gehäuse mit einem Fluideinlass und einem Fluidauslass aufweist, sowie mehrere Ventile vorgesehen sind, um eine sichere Abdichtung der Schnellanschlusskupplung bis zur vollständigen Herstellung der Verbindung zu gewährleisten. Diese Ventile werden dabei nach Ansetzen der Schnellanschlusskupplung in einer bestimmten vorgegebenen Reihenfolge geschaltet, wobei zuerst durch das Aufschieben der Schnellanschlusskupplung an einen Anschlussnippel das Auslassventil geöffnet wird, dann bei weiterer Bewegung eines Steuerungshebels als Betätigungsvorrichtung die Spannzangen geschlossen werden und schließlich das Einlassventil geöffnet wird. Der Steuerungshebel ist hierbei über eine Exzenterwelle mit der Schiebehülse für die Beaufschlagung der Spannzangen und mit einem zentralen Dichtkolben in Eingriff, der auch den Fluideinlass nach erfolgtem Anschluss der Steckkupplung freigibt.

Obwohl hierdurch eine sichere Anschlussmöglichkeit geschaffen wird, ist der Aufbau dieser Kupplung aufgrund der Vielzahl der Bauteile noch relativ aufwendig, was auch für die eingangs genannte Betätigungsvorrichtung gilt, obwohl hierdurch eine Einhand-Bedienung ermöglicht wird.

Aus der WO-A-93/20378 des Anmelders ist weiterhin ein Schnellanschluss, insbesondere zum Füllen von Gasflaschen bekannt, wobei im Bereich des Auslasses eine Schnellanschlussvorrichtung in Form von Spannzangen mit einem Eingriffprofil vorgesehen ist. Hierbei ist auch ein in dem Kupplungsgehäuse gleitend verschiebbarer, hohler Dichtkolben beschrieben, der über eine mit einer Schiebehülse verbundenen Betätigungseinrichtung für das Schließen bzw. Öffnen der Spannzangen verbunden ist. Auch hier ist ein gesondertes Bedienen der Betätigungsvorrichtung in Form eines Hebels erforderlich, so dass die Handhabung dieses Schnellanschlusses ebenfalls verbesserungsfähig ist.

Demzufolge liegt der Erfindung die Aufgabe zugrunde, eine Betätigungsvorrichtung für eine Schnellanschlusskupplung der eingangs genannten Art oder an Ventilen, zu schaffen, die einen einfacheren Aufbau und eine sichere Handhabung ermöglicht.

Diese Aufgabe wird gelöst durch eine Betätigungsvorrichtung gemäß den Merkmalen des Anspruches 1. Bevorzugte Weiterbildungen der Erfindung sind Gegenstand der Unteransprüche.

Die vorgeschlagene Betätigungsvorrichtung zeichnet sich durch eine besonders einfache Bedienung aus, die zudem besonders sicher ist. Insbesondere wird durch die schwenkbare Lagerung eines Verbindungshebels zum Schieber hin eine reibungsarme Betätigung über viele Jahre hinaus erzielt, was für die bevorzugte Ausführungsform zur Befüllung von Gastanks mit Erdgas an Tankstellen wichtig ist. Hierdurch wird eine lange Lebensdauer mit geringem Verschleiß und langen Wartungszeiträumen erzielt, was sich insgesamt auf die sichere Bedienung positiv auswirkt.

Es sei darauf hingewiesen, dass sich die vorgeschlagene Betätigungsvorrichtung, für verschiedene Anschlussformen eignet. Zum Anschluss der Kupplung können auch Profilformen wie Außen-/Innengewinde, Einstiche oder Wülste an dem Anschlussnippel vorgesehen sein, wobei die gegenüberliegende Spannzangenform korrespondierend ausgebildet ist. Durch den mit der Betätigungsvorrichtung verbundenen Hebelmechanismus wird hierbei eine sichere Verriegelung der Spannzangen oder ähnlicher Verriegelungselemente ermöglicht. Von besonderer Bedeutung ist die Realisierung der Betätigungsvorrichtung mittels einem von Zapfpistolen bekannten Handhebel, so dass auf besonders einfache Weise eine sichere und schnelle Einhand-Bedienung der Schnellanschlusskupplung über lange Zeiträume ermöglicht wird.

Nachfolgend wird ein Ausführungsbeispiel anhand der beiliegenden Zeichnungen näher erläutert und beschrieben. Hierin zeigen:
- Fig. 1: eine Seitenansicht einer Schnellanschlusskupplung für einen Tankanschluss;
- Fig. 2: eine Darstellung der Schnellanschlusskupplung gemäß Fig. 1 im Längs- Halbschnitt;
- Fig. 3: eine vergrößerte Darstellung des mittleren Bereichs von Fig. 1; und
- Fig. 4: eine Perspektivdarstellung gemäß Fig. 3.

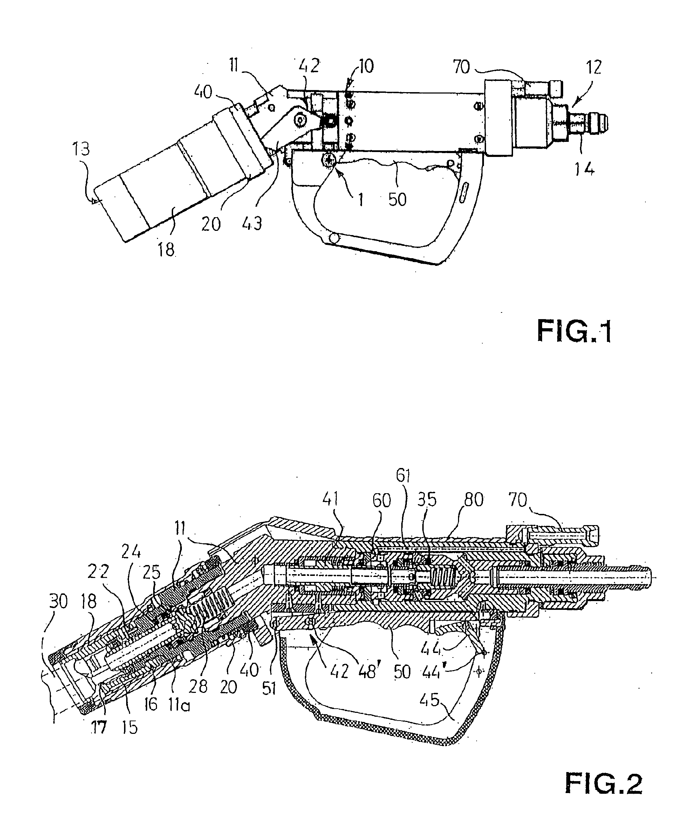

In Fig. 1 ist ein Ausführungsbeispiel einer Betätigungsvorrichtung 1 für eine Schnellanschlusskupplung 10 vor dem Anschluss an einen Anschlussnippel 30 (vgl. Fig. 2) gezeigt. Diese Schnellanschlusskupplung 10 ist im Grundaufbau aus dem eingangs genannten Gebrauchsmuster der Anmelder bekannt und weist ein rohrförmiges, abgekröpftes Gehäuse 11 bzw. miteinander verbundene Gehäuseteile auf, wobei hier die rechte Stirnseite als Einlass 12 dient und die linke Stirnseite als Auslass 13 für die Weiterleitung des zu übertragenden Fluids an den Anschlussnippel 30. Der Einlass 12 zu dem Gehäuse 11 weist einen Anschlussadapter 14 auf, der an einen Schlauch oder eine Rohrleitung zur Zuführung des zu übertragenden Fluids angeschlossen werden kann. Der Anschlussadapter 14 kann hierbei in Anpassung an das zu übertragende Fluid, insbesondere an die jeweils gewünschten Zuführwinkel, Durchlassquerschnitte usw. gestaltet sein.

Auf der dem Anschlussadapter 14 gegenüberliegenden Stirnseite, nämlich dem Auslass 13, sind mehrere in Rohrform angeordnete, längliche Spannzangen 15 als Verriegelungselemente vorgesehen (vgl. Fig. 2), die kurz vor dem Aufstecken auf den Anschlussnippel 30 radial nach außen aufgespreizt sind, wie dies beispielsweise auch in der vorstehend genannten WO-A-93/20378 dargestellt ist. Die länglichen Spannzangen 15, von denen um das Gehäuse 11 herum wenigstens eine, im allgemeinen drei oder sechs Spannzangen angeordnet sind, sind an ihrem hier rechten Ende an einer Ringnut 11 a des Gehäuses 11 eingehängt und dabei durch eine Ringfeder 16 vorgespannt, so dass die Spannzangen 15 radial nach außen aufgespreizt werden. An dem hier linken Ende an der nach innen abgekröpftem Fläche weisen die Spannzangen 15 jeweils korrespondierend zu dem Anschlussnippel 30 ausgebildete formschlüssige Eingriffsprofile 17 auf.

Um die Spannzangen 15 herum ist eine äußere Schiebehülse 18 vorgesehen, die an dem zylindrischen Außenmantel des Gehäuses 11 geführt ist und mit der Betätigungsvorrichtung 1 in Richtung zum Anschlussnippel 30 axial vorgeschoben werden kann, wie dies untenstehend beschrieben wird. Die Schiebehülse 18 weist hierbei eine Verlängerung 20 auf, die zur Betätigungsvorrichtung 1 im mittleren Bereich der Schnellanschlusskupplung 10 hin die Axialverschiebung der Schiebehülse 18 ermöglicht, wodurch die Spannzangen 15 durch den Umgriff mittels der Schiebehülse 18 in der Anschlussstellung arretiert werden.

Wie im Längsschnitt der Fig. 2 gezeigt, ist an der zum Auslass 13 hin gelegenen Innenfläche des Gehäuses 11 ein Dichtkolben 22 geführt, der mit seiner vorderen Stirnseite an einer konisch ausgeführten Dichtfläche des Anschlussnippels 30 anliegt. Der Dichtkolben 22 ist gegenüber den Spannzangen 15 mit mehreren am vorderen Ende des Gehäuses 11 eingesetzten Dichtungsringen 24 abgedichtet, so dass das im wesentlichen entlang der Zentralachse der Schnellanschlusskupplung 10 strömende gasförmige und/oder flüssige Fluid nicht nach außen hin austreten kann.

Von Bedeutung ist weiterhin ein zentral im Gehäuse 11 gelagertes Auslassventil 25. Das Auslassventil 25 ist hierbei von einer Druckfeder 28 beaufschlagt, die im Gehäuse 11 geführt ist. Durch dieses Auslassventil 25 wird sichergestellt, dass in der hier dargestellten abgekuppelten Position bzw. bis kurz vor Anschluss der Schnellanschlusskupplung 10 an den Anschlussnippel 30 das durch den Anschlussadapter 14 zugeführte Fluid auch bei geöffnetem Anschlusshahn an der Betankungsanlage nicht ausströmen kann.

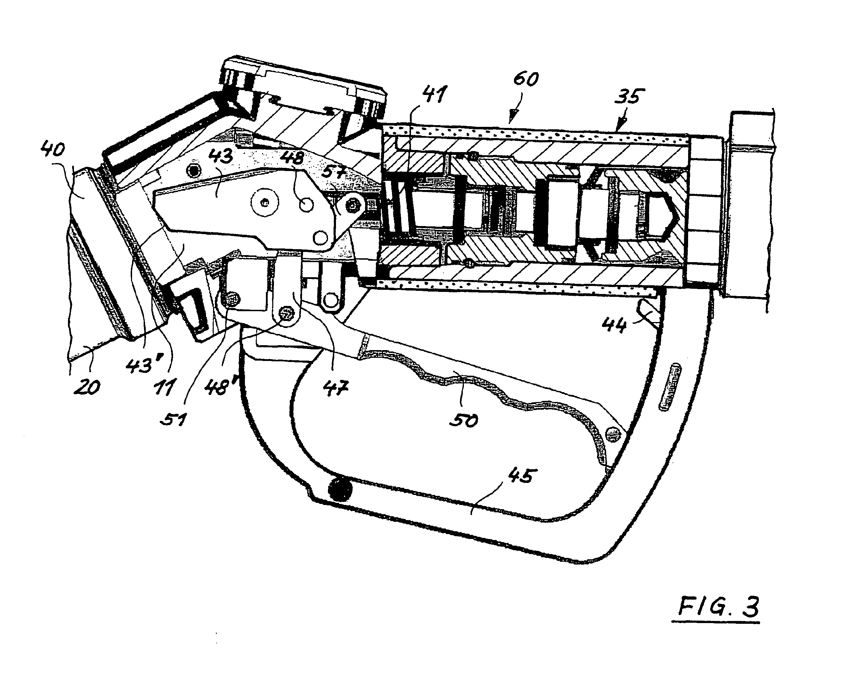

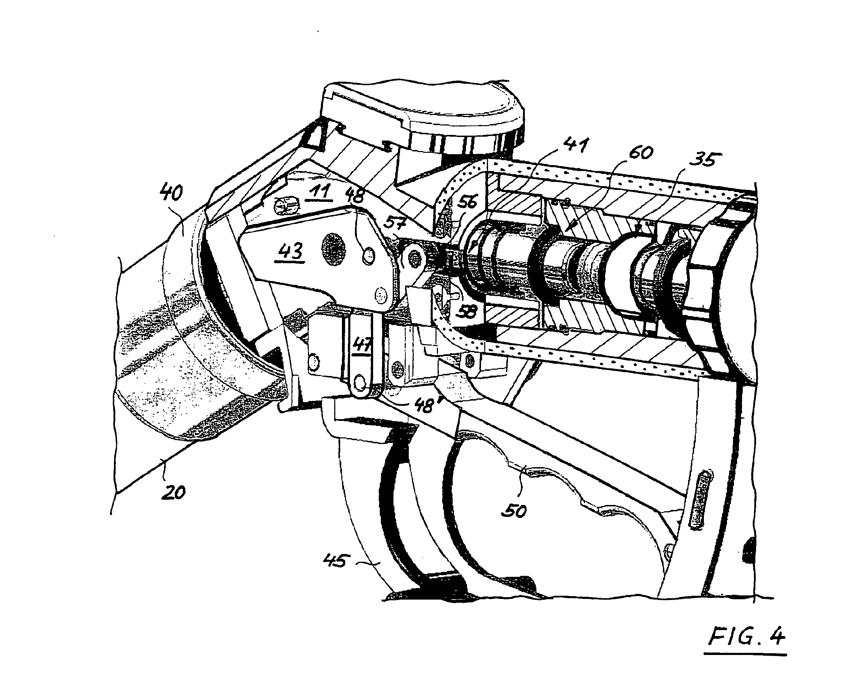

Das Auslassventil 25 wird beim Aufstecken der Schnellanschlusskupplung 10 auf den Anschlussnippel 30 vom Dichtkolben 22 axial verschoben wird und hierbei das Auslassventil 25 öffnet. Hierbei ist jedoch noch ein Einlassventil 35 (vgl. auch Fig. 3 und 4) der Schnellanschlusskupplung 10 geschlossen, das dann erst in der weiteren Kupplungsabfolge von der Betätigungsvorrichtung 1 bzw. einem zugehörigen Schieber 41 geöffnet wird.

Von Bedeutung ist hierbei ein am Außenumfang des Gehäuses 11 geführter Schiebering 40, der über einen Hebelmechanismus 42 beaufschlagt wird und zugleich den Schieber 41 steuert. Der Schieber 41 wird hierbei im Gehäuse 11 geführt und von einer Druckfeder beaufschlagt. Wie aus der Darstellung ersichtlich, ist die zum Einlass 12 hin weisende Seite des Schieberings 40 von einem Schwenkhebel 43 beaufschlagt, wodurch dieser aus der Öffnungsstellung in die Anschluss- oder Verriegelungsstellung verschiebbar ist. Der Schwenkhebel 43 wird hierbei mit einem Handhebel 50 verschwenkt, wodurch zugleich ein Anschlag 44 am Handgriff 45 erreicht wird.

Von besonderer Bedeutung ist - wie in Fig. 3 und 4 dargestellt- ein Verbindungshebel 57, der einerseits am Schwenkhebel 43 gelagert und anderseits mit dem Schieber 41 gekoppelt ist, nämlich über eine in einer Kulisse 58 geführten Rolle 56. Hierdurch ergibt sich eine reibungsarme und damit wartungsarme Betätigung. Zudem ist am Schwenkhebel 43 ein (bevorzugt spiegelbildlich zwei) Hebel 47 über einen Bolzen 48 befestigt sind. Über einen hier unteren Bolzen 48' ist der Hebel 47 mit dem Handhebel 50 verbunden. Bei der Bewegung des Handhebels 50 um die Achse 51 wird über den Hebel 47 der Schwenkhebel 43 zur Beaufschlagung des Schieberings 40 bewegt, jedoch auch gleichzeitig der Verbindungshebel 57, so dass sich die Rolle 56 in axialer Richtung in der Kulisse 58 bewegt. Hierdurch wird der Schieber 41 gegen das Einlassventil 35 gedrückt, so dass dieses in die Offenstellung bewegt wird. Der Schieber 41 wird dabei von einer Druckfeder beaufschlagt. In bevorzugter Weise ist dabei der Schieber 41 nicht nur zur gesteuerten Öffnung des Einlassventils 35 vorgesehen, sondern ebenfalls zur Betätigung eines Entlüftungsventils 60. Dieses führt (wie in Fig. 2 dargestellt) über eine im Gehäuse 11 angeordnete Bohrung 61 zu einem Entlüftungsanschluss 62, so dass in der Anschlusskupplung verbleibendes Gas oder Fluid zurückgeführt werden kann. Dieses von dem Schieber 41 ebenfalls mitbetätigte Entlüftungsventil 60 erleichtert zudem das Abkuppeln, da hierdurch ein definierter Druckabbau erfolgen kann. Wie insbesondere aus Fig. 4 ersichtlich wird, ist der Hebel 47 zum oberen Bolzen 48 hin abgekröpft, um dem Verbindungshebel 57 zur Lagerung am Schwenkhebel 43 genügend Platz zu lassen und eine günstige Übersetzung zu realisieren.

Die hier gezeigte Anordnung weist neben der wartungsarmen Lagerung auch noch den Vorteil auf, dass eine große Kraftübersetzung erreicht wird, so dass der damit verbundene Schieber 41 sehr hohe Ventilöffnungskräfte, z. B. auf das Einlassventil 35 und das Entlüftungsventil 60, aufbringen kann. Diese Übersetzung wird auch durch die Hebellängen der Hebel 47 bzw. Verbindungshebel 57 unterstützt. Dabei sei darauf hingewiesen, dass ein derartiger Hebelmechanismus in symmetrischer Weise beidseitig angeordnet ist.

Wie aus der Zusammenschau der Zeichnungen ersichtlich, wird beim Aufstecken der Schnellanschlusskupplung 10 auf den Anschlussnippel 30 der Dichtkolben 22 nach rechts verschoben, wobei zugleich der am Außenumfang vorgesehene Schiebering 40 mit dem Schwenkhebel 43 nach links verschoben wird. Nach einem geringen Weg von einigen Millimetern werden die Spannzangen 15 aus ihrer Sperrstellung frei, so dass diese nach innen schnappen können und somit das Eingriffsprofil an dem korrespondierend ausgebildeten Anschlussprofil des Anschlussnippels 30 eingreift. Hierdurch wird praktisch zeitgleich die Schiebehülse 18 für die axiale Bewegung nach links frei, da die Schiebehülse 18 ebenfalls von der Betätigungsvorrichtung 1 über den Schiebering 40 beaufschlagt wird. Durch die Axialbewegung der Schiebehülse 18 greift diese über die radial äußeren Enden der Spannzangen 15, so dass diese in ihrer Eingriffsstellung am Anschlussnippel 30 formschlüssig gehalten werden.

Zum Lösen der Schnellanschlusskupplung 10 und damit dem Zurückführen der Anschlussstellung in die Öffnungsstellung wird der Anschlag 44 am Handbügel 45 per Hand etwas zurückgezogen. Nach einem kurzen Verschwenkweg wird zunächst der Handhebel 50 (nach unten) freigegeben, wodurch letztlich die Schiebehülse 18 zurückgezogen wird. Damit können die Spannzangen 15 sich wieder radial nach außen aufspreizen, wobei simultan der Schieber 41 hier nach links zum Auslassende 13 hin verschoben wird. Aufgrund des kurvenförmigen Profils der Vorderfläche 43' am Schwenkhebel 43 kann diese Hubbewegung des Schieberings 40 sehr exakt erfolgen. Bevor sich somit der Dichtkontakt zwischen dem Dichtkolben 22 und der Dichtfläche des Anschlussnippels 30 löst, wird zudem das Auslassventil 25 sicher geschlossen. Durch diese praktisch fast gleichzeitige Abfolge wird ein sehr schnelles Schließen der Ein- bzw. Auslassventile 35 und 25 erreicht, so dass kein Fluidvolumen austreten kann.

Der Schiebering 40, zusammen mit dem vorgeschlagenen Hebelmechanismus 42, erlaubt zudem ein sicheres, leichtgängiges Aufstecken der Schnellanschlusskupplung 10 auf den Anschlussnippel 30, wobei die Spannzangen 15 erst geschlossen werden, wenn der Dichtkontakt sichergestellt ist, da die Öffnungsstellung der Spannzangen 15 so lange aufrechterhalten wird, bis von der Axialverschiebung des Dichtkolbens 22 und des Schieberings 40 in direkter Reihenfolge die Öffnungsstellung der Spannzangen 15 gelöst wird, um den Anschluss herzustellen.

In den Fig. 3 und 4 ist eine vergrößerte Darstellung gezeigt, wobei korrespondierende Bauteile mit dem gleichen Bezugszeichen wie in Fig. 1 und 2 bezeichnet sind. Die Betätigungsvorrichtung 1 weist dabei die gleiche Funktion wie bei Fig. 1 und 2 beschrieben auf. Über den hier wesentlichen Verbindungshebel 57 wird über den davon betätigten Schieber 41 durch dessen Axialbewegung (hier nach rechts) der Gasdurchlass freigeben. An dem Anschlussadapter 14 (vgl. Fig. 1 und 2) ist zudem eine Schlauchleitung 70 angeschlossen, die von einer Ummantelung 80 umgeben ist. Diese Ummantelung 80 ist zugleich als Handgriff ausgebildet.

## Patentansprüche

1. Betätigungsvorrichtung für eine Schnellanschlusskupplung zur Übertragung von gasförmigen und/oder flüssigen Fluiden, mit einem rohrförmigen Gehäuse (11) und einem gegenüber dem Gehäuse verschiebbar gelagerten Schieber (41), der mit einem Hebelmechanismus (42) gekoppelt ist, welcher einen seitlich am Gehäuse (11) gelagerten Schwenkhebel (43) aufweist, wobei am Schwenkhebel (43) wenigstens ein zum Schieber (41) hin führender Verbindungshebel (57) gelagert ist, der mit dem schieber (41) gekoppelt ist, **dadurch gekennzeichnet, dass**
der Schwenkhebel (43) mit einem Handhebel (50) verbunden ist und neben dem Verbindungshebel (57) ein zum Handhebel (50) hin führender, bevorzugt abgekröpfter Hebel (47) am Schwenkhebel (43) angelenkt ist.

2. Betätigungsvorrichtung nach Anspruch 1,
**dadurch gekennzeichnet, dass**
zwei Schwenkhebel (43) spiegelbildlich seitlich am Gehäuse (11) vorgesehen sind.

3. Betätigungsvorrichtung nach Anspruch 1 oder 2,
**dadurch gekennzeichnet, dass**
die Vorderfläche des/der Schwenkhebel (-s) (43) einen Schiebering (40) beaufschlagt.

4. Betätigungsvorrichtung nach einem der Ansprüche 1 bis 3,
**dadurch gekennzeichnet, dass**
der Verbindungshebel (57) schieberseitig an einer Rolle (56) anliegt.

5. Betätigungsvorrichtung nach Anspruch 4,
**dadurch gekennzeichnet, dass**
die Rolle (56) in einer dem Schieber (41) benachbarten Kulisse (58) geführt ist.

6. Betätigungsvorrichtung nach einem der Ansprüche 3 bis 5,
**dadurch gekennzeichnet, dass**
der Schiebering (40) auf der Außenumfangsfläche des Gehäuses (11) geführt ist.

7. Betätigungsvorrichtung nach einem der Ansprüche 1 bis 6,
**dadurch gekennzeichnet, dass**
zentral im Gehäuse (11) ein Auslassventil (25) und/oder ein Einlassventil (35) und/oder ein Entlüftungsventil (60) angeordnet ist, das vom Schieber (41) betätigbar ist.

8. Betätigungsvorrichtung nach einem der Ansprüche 3 bis 7, **dadurch gekennzeichnet, dass**
die Vorderfläche des Schwenkhebels (43) eine anfänglich flachere Steigung zur Erzeugung einer Kraftübersetzung am Schiebering (40) aufweist.

## Claims

1. Actuating device for a rapid coupling for transferring gaseous and/or liquid fluids, comprising a tubular housing (11) and a slide (41) which is mounted in a manner that enables it to be displaced relative to the housing and which is coupled with a lever mechanism (42) having a pivoting lever (43) which is laterally mounted on the housing (11), wherein at least one connecting lever (57) leading towards the slide (41) and being connected to the slide (41) is mounted on the pivoting lever (43),
**characterized in that** the pivoting lever (43) is connected to a hand lever (50) and a lever (47), being preferably bent, leads towards the hand lever (50) and is pivoted on the pivoting lever (43) in addition to the connecting lever (57).

2. Actuating device according to claim 1, **characterized in that** two pivoting levers (43) are provided on both sides on the housing (11) in a mirror-inverted manner.

3. Actuating device according to claim 1 or 2, **characterized in that** the front surface of the pivoting lever(-s) (43) pressures a sliding ring (40).

4. Actuating device according to one of the claims 1 to 3, **characterized in that** the connecting lever (57) rests on a roller (56) on the side of the slide (41).

5. Actuating device according to claim 4, **characterized in that** the roller (56) is guided in a connecting link (58) neighbouring the slide (41).

6. Actuating device according to one of the claims 3 to 5, **characterized in that** the sliding ring (40) is guided on the outer peripheral area of the housing (11).

7. Actuating device according to one of the claims 1 to 6, **characterized in that** an outlet valve (25) and/or an inlet valve (35) and/or a venting valve (60) are provided centrally in the housing (11), and the venting valve (60) can be actuated by the slide (41).

8. Actuating device according to one of the claims 3 to 7, **characterized in that** the front surface of the pivoting lever (43) comprises an initially flatter incline for producing a force multiplication on the sliding ring (40).

## Revendications

1. Dispositif d'actionnement pour un raccord à accouplement rapide dévolu au transfert de fluides gazeux et/ou liquides, comprenant un carter tubulaire (11) et un tiroir (41) monté à coulissement vis-à-vis dudit carter, et couplé à un mécanisme (42) à leviers qui est muni d'un levier pivotant (43) monté latéralement sur ledit carter (11), au moins un levier de liaison (57), menant au tiroir (41) et couplé audit tiroir (41), étant monté sur ledit levier pivotant (43),
**caractérisé par le fait que**
le levier pivotant (43) est relié à un levier manuel (50) et
un levier (47) de préférence coudé, menant audit levier manuel (50), est articule sur ledit levier pivotant (43) à côté du levier de liaison (57).

2. Dispositif d'actionnement selon la revendication 1,
**caractérisé par le fait que**
deux leviers pivotants (43) sont prévus spéculairement sur les côtés du carter (11).

3. Dispositif d'actionnement selon la revendication 1 ou 2,
**caractérisé par le fait que**
la face frontale du/des levier(s) pivotant(s) (43) sollicite une bague coulissante (40).

4. Dispositif d'actionnement selon l'une des revendications 1 à 3,
**caractérisé par le fait que**
le levier de liaison (57) est en applique contre un rouleau (56) côté tiroir.

5. Dispositif d'actionnement selon la revendication 4,
**caractérisé par le fait que**
le rouleau (56) est guidé dans une coulisse (58) voisine du tiroir (41).

6. Dispositif d'actionnement selon l'une des revendications 3 à 5,
**caractérisé par le fait que**
la bague coulissante (40) est guidée sur la surface du pourtour extérieur du carter (11).

7. Dispositif d'actionnement selon l'une des revendications 1 à 6,
**caractérisé par le fait**
**qu'**une soupape d'évacuation (25) et/ou une soupape d'admission (35) et/ou une soupape de ventilation (60), pouvant être actionnée(s) par le tiroir (41), est/sont logée(s) centralement dans le carter (11).

8. Dispositif d'actionnement selon l'une des revendications 3 à 7, **caractérisé par le fait que**
la face frontale du levier pivotant (43) présente une pente ascendante initialement moins accentuée, en vue d'engendrer une démultiplication de force sur la bague coulissante (40).
